# EUROPEAN PATENT APPLICATION

(11) **EP 4 108 996 A1**
(43) Date of publication of application: **28.12.2022**
(21) Application number: 22164936.1
(22) Date of filing: 29.03.2022
(51) Int. Cl.: F24D 3/10

(54) **MODULAR HEAT STATION**

(30) Priority: 24.06.2021 DK PA202100418
(71) Applicant: Danfoss A/S, 6430 Nordborg (DK)
(72) Inventor: OMEJC, Luka, Nordborg (DK); STUPICA, Franci, Nordborg (DK); URBAS, Simon, Nordborg (DK); FRANCK, Martin Lynder, Nordborg (DK); VOLK, Matej, Nordborg (DK)
(74) Representative: Stevens, Brian

(57) **Abstract**

The present invention relates to a heating station (500) formed of a monolithic main part (1) in that it is formed of a single body and adapted for a heat exchanger (2) to be connected to a set of first flow conduits (3) formed within said heating station (500) by a set of first coupling ports (5), wherein the heating station (500) is formed with receiving spaces (10, 10a, 10b) in fluid connection to the first flow conduits (3) adapted for specialized flow devices (25) to be inserted into said receiving spaces (10, 10a, 10b), e.g. valve assemblies, flow sensors or pumps, and wherein a set of second coupling ports (6) are adapted to connect the first flow conduits (3) to heating circuit pipes of a supply network and a consuming network, and where a set of third f coupling ports are adapted for connecting the main part (1) to an additional module (100).

## Description

### BACKGROUND

The patent application relates to a heating station which is capable of being linked to between supply network and a consuming network. The supply network could include a district-heat network and as adapted to supply heat to the consumer network which comprises at least one heat-consumer.

Such a heating station is traditionally formed of a platform with pipes connecting a heat exchanger to couplings to the supply and consumer networks. Operative devices such as valves, heat meters, thermostats, thermal sensors etc. could be connected to the pipes to set and monitor flows and fluids within the heating station.

Producing such a heating station however is time consuming as each individual pipe section and operative device are to be connected and possible connected by threaded couplings. This increases cost and production time, just as it increases the number if individual parts to be produced and connected.

The object of the present invention is to introduce a heating station that is easier and cheaper to produce, but still is versatile in the sense that it is easily adaptable to individual requirements.

### SUMMARY OF THE INVENTION

The object is solved according to the solution given in the claims.

This includes to introduce a heating station formed of a monolithic main part in that it is formed of a single body and adapted for a heat exchanger to be connected to a set of first flow conduits formed within said heating station by a set of first coupling ports, wherein the heating station is formed with receiving spaces in fluid connection to the first flow conduits adapted for specialized flow devices to be inserted into said receiving spaces, e.g. valve assemblies, flow sensors or pumps, and wherein a set of second coupling ports are adapted to connect the first flow conduits to heating circuit pipes of a supply network and a consuming network, and where a set of third coupling ports are adapted for connecting the main part to an additional module.

The monolithic construction of the main part enables a simple production not requiring a plural of parts being connected e.g. by threaded couplings. The main part could be manufactured in a few processes and be supplied as a standard unit with or without operative devices in form of specialized flow devices connected. The installer also could install the operative devices, possible onsite where when installing the heating station.

A receiving space may form part of a first flow conduit, where the receiving space defines two openings in the inner receiving space wall. The receiving space could be adapted for a valve to regulate the fluid flow between said two openings. An edge may be formed within in the inner receiving space wall between said two openings that is adapted to operate as a valve seat.

At least two different first flow conduits may be connected to a receiving space allowing for a diversion valve to be inserted. This could be formed as three sections of first flow conduits each connecting the receiving space by an opening in the inner receiving space wall. The diversion valve then could be adapted to change direction of the flow between different flow conduits by opening and closing the respective three openings, selecting which of the three is in fluid connection. Alternatively, it could select the degree of flow rates.

At least one receiving space may be formed with a pressure section adapted for a pressure actuator and which forms a fluid connection via a pressure conduit to a position of a first flow path.

In an embodiment a first flow path forms two sections not connected to each other, where each section has an access opening adapted for a connection device to connect them, where said connection device could be selected among a flow regulation valve, a pressure control valve, a flow sensor or a tube section. Rather than being inserted into a receiving space, the connection device then would be connected at the outside of the heating station. The main part may be provided with means for the connection device to be fixed to the heating station, such as threaded coupling parts adapted for screws tix the connection device.

The additional station module itself comprises access ports allowing it to be connected to a further additional module.

In general, allowing for additional modules to the main part enables the heating station to be increased e.g. even after it has been installed.

The first flow conduits may include a supply heating fluid conduit and a return heating fluid conduit connecting adapted for a heating fluid to be circulated to a first flow path of a heat exchanger, and where flow conduits incudes a supply domestic fluid conduit and a return domestic fluid conduit connecting adapted for water to be circulated to a second path of a heat exchanger, the first flow conduits further includes a flow path connected to said supply domestic fluid circuit for returning un-heated water, and where the supply heating fluid conduit and return heating fluid conduits only is connected to the set of third coupling ports to be connected to the additional module.

In an embodiment a receiving space is provided on each first flow path allowing the selection to insert a flow device or a sealing plug to close flow in said first flow path. This enables inactive first flow paths to be closed.

The set of second coupling ports may be adapted to connect to an interconnection device adapted to be positioned between the heating station and heating flow circuit pipes of the supply network and consuming network, wherein the interconnection device is formed of holding means fixing a set of interconnecting conduits adapted to be to couple to the first flow conduits within the heating station to the heating flow circuit pipes, and where the interconnecting conduits are adapted for flow devices, such as valves, flow sensors and pumps, to be positioned between the heating station and the supply and consuming network.

### FIGURES

- Fig. 1: Main part of a heating station according to the present invention
- Fig.2A: Illustration of a receiving space with an inner edge
- Fig. 2B: Illustration of the receiving space with an inner edge and a valve inserted into the receiving space using the inner edge as valve seat

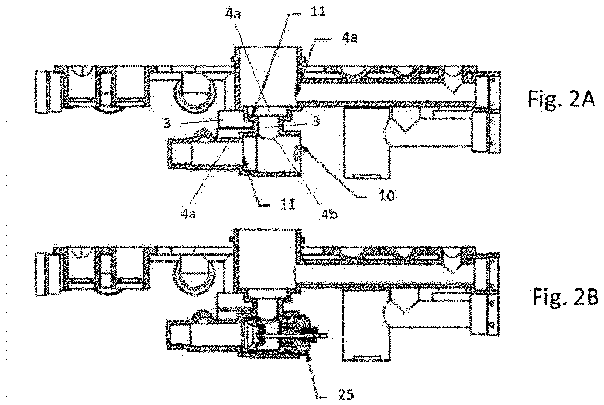

- Fig. 2: Illustration of the main part with a heat exchanger, a interconnection device and an additional module.

### DETAILED DESCRIPTION OF THE INVENTION

It should be understood, that the detailed description and specific examples, while indicating embodiments of the invention, are given by way of illustration only, since various changes and modifications within the spirit and scope of the invention will become apparent to those skilled in the art from the detailed description.

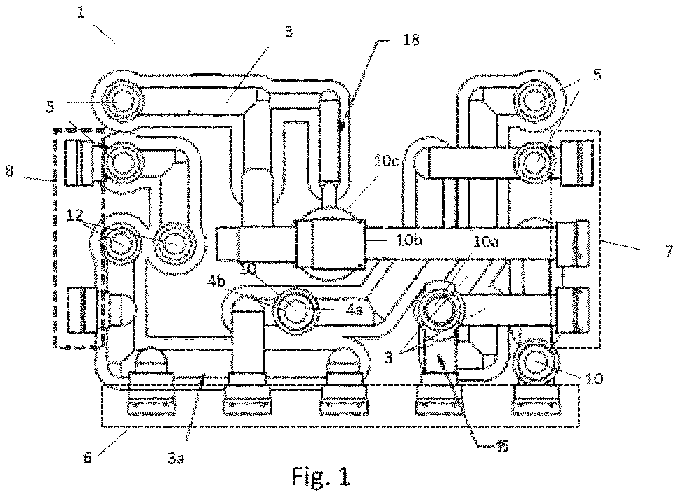

Fig. 1 illustrates a part of a heating station, or unit, defining a monolithic main part (1) that is at least predominately formed as a single body. The 'single body' is defined in the manner that after production it is not formed a plural parts adapted to be connected together, but may be formed of a plural of parts being fixed during production by welding, gluing etc, or e.g. moulded (like injection moulding) or cast as a single body, or e.g. 3D printed or produced on other suitable manners. The main part (1) may be formed of cast iron, red cast iron, aluminium or various plastics or other non-metal materials, or may be formed as a combination thereof.

Such a heating station is adapted to be positioned between supply network and a consuming network. The supply network supplies a heating fluid and a domestic fluid (usually fresh water). The heating fluid could from a plant of any kind, for example cogeneration plant burning fossil fuels or biomass, heat-only boiler stations, geothermal heating, heat pumps and central solar heating etc. The consuming network may be for residential heating and usually includes a fluid circuiting system, such as for supplying heat in domestic living spaces, houses etc. Such a residential heating system may include radiators, floor heating systems, showers, water taps etc. The supply and the consuming networks usually are formed of a system of metal pipes.

The main part (1) of the heating station is formed with a position adapted for a heat exchanger (2) to be fixed at a position and connected by coupling means (not shown) to a set of first coupling ports (5).

The set of first coupling ports (5) connects to a set of first flow conduits (3) formed within said main part (1) and though these to a set of second coupling ports (6).

At least some of the first (3) flow conduits may be formed with receiving spaces (10) in fluid connection to the flow paths (3). The receiving spaces (10) are adapted for specialized flow devices (25) to be inserted into said receiving spaces (10), e.g. valve assemblies, flow sensors or pumps etc. By 'specialized' is referred to the flow devices (25) being specially adapted to be inserted into such receiving spaces (10) but may not necessarily be adapted to be connected to a pipe of the consumer network.

Such a receiving space (10) thus forms part of a flow path (3) splitting it in subparts. Each subpart is fluidically connected to the inner volume of the receiving space (10) by an opening (4a, 4b) in the receiving space (10) inner wall, and the receiving space inner volume forms part of the respective flow path (3). When e.g. a valve (25) is inserted into said receiving space (10), the valve is adapted to regulate the flow passage formed within the inner volume between the two openings (4a, 4b) and thereby the flow rate.

The specialized devices (25) may in themselves be fully operational units, understood in the sense, they do not require other parts to operate. In the example of the specialized device being a valve (25), it comprises all the parts to be able to operate as a valve. Alternatively, the specialized devices (25) functions as insert elements, such that they can only function when operating in combination with the receiving space (10). Again, taking a valve as example, it could be operating together with the inner wall of the receiving space (10), e.g. by operating with the inner wall, or a section thereof, as the valve seat. The flow then could pass at the outside of the valve, the valve formed with a closing element adapted to operate in connection to the inner wall to define a valve opening.

In one example, a receiving space (10) is formed with an inner edge (11) visible on fig. 2A and 2B showing side view of a receiving space (10) where an inner edge (11) is formed between the first opening (4a) the flow path section (3a) and a second opening (4b) of the flow path section (3b). Fig. 2A shows a free receiving space (10), whereas a in fig. 2B a valve (25) is inserted operating with the inner edge (11) as valve seat.

In an alternative or additional embodiment, the inner edge (11) operates as end stop for the insertion of the specialized device (25), which in the additional embodiment could be combined with the functional corporation of the specialized device (25), such as being valve seat for a valve.

One set of flow paths (3), and the associated set of first couplings (5), may be adapted to connect a heating fluid supply and return to the heat exchanger (2). A set of second flow pats (3), and associated set of first couplings (5), may be adapted to connect a domestic fluid supply and return to the heat exchanger (2). The heating fluid passes one flow path within the heat exchanger (2), often referred to as the primary path, then exchanges heat with the domestic fluid (e.g. water) passing a heat exchanger second (2) flow path, often referred to as the secondary path. In one embodiment, the heating fluid has a higher temperature than the domestic fluid. The domestic fluid therefore is heated and can be used either to supply heat to e.g. radiators or floor heating installations, or to water taps or showers. In another embodiment, the domestic fluid is being cooled by the heating fluid.

How the first openings (5) are connected to the heat exchanger (2) may be a matter of the design of connected heat exchanger (2). Different first openings (5) could be connected as inlet or outlet to respectively the primary or secondary path if another heat exchanger (2) is connected or it is oriented differently.

The first coupling ports (5) and/or any of the second (6), third (7) and fourth (8) set of coupling ports may be proved with quick couplings. In the present context this is coupling which replace threaded or flanged connections requiring wrenches. In an embodiment, either the coupled part or the coupling port (5, 6, 7, 8) is formed with a first coupling part defining an outer recess and the other is formed with a second coupling part defining openings. During coupling, the first coupling part is positioned within the first coupling part such that the openings aligns with the outer recess. A fixation part then is inserted in openings and the recess to fix the parts together. Sealings means may also be inserted, or form part of the first or second coupling part. In one embodiment, the fixation part is adapted to be fixed further to the main part (1) e.g. by bolt and nuts or screws, or by other fixation means.

The main part (1) may comprise a receiving space (10a) connected to at least two different flow paths (3). A diversion valve (25) inserted then could direct the fluid flow in two directions for double use of the fluid.

At least one receiving space (10c) may formed with a pressure section (10d) that could be positioned in any way in relation to the pressure section (10b) and may simply be a part of it. The pressure section (10d) is in fluid connection to the receiving space (10) and is adapted for the insertion of a pressure responsive element. In the present definition, the pressure responsive element is adapted to react according to a change in a differential pressure to adjust a pressure responsive valve element. This could e.g. be formed as diaphragm separating two pressure chambers, each in fluid communication to different positions in the flow circuits formed of the flow paths (3). The diaphragm is connected to the pressure responsive valve element, and when the pressure difference at the two different positions changes, the diaphragm deflects and the pressure responsive valve element translocate relative to a valve seat, until a new equalization is obtained.

A fluid connection via a pressure conduit (18) may be formed in the main part (1), to form pressure communication between the pressure section (10c) and a position of a flow path (3). In the illustrated embodiment, the pressure conduit (18) connects to a flow path (3) also connected to the receiving space (10b). This enables the pressure responsive element to regulate the differential pressure over a valve (25) in the receiving chamber (10b), the other pressure communication possible being via the fluid communication between the pressure section (10c) and receiving chamber (10b).

At least one flow path (3) may form two sections not connected to each other, and each with an access opening (12) adapted for a connection device (not shown) to connect them fluidically. The access openings (12) are adapted to couple to said connection device, which e.g. could be selected among a flow regulation valve, a pressure control valve, a flow sensor, or a tube section. The access openings (12) therefore may differ from the receiving chambers (10, 10a) in that the connection device is not to be inserted into a receiving chamber, but rather are to be connected to the main part (1) outside. Another difference is, that flow only can pass between the two access openings (12) via the connection device.

The main part (1) may be provided with means for the connection device to be fixed to the main part (1), such as by screws, bolts or by other fixation means. The access openings (12) may also be provided with coupling means such as the other coupling ports (5, 6, 7, 8, 9), possible of the same kind.

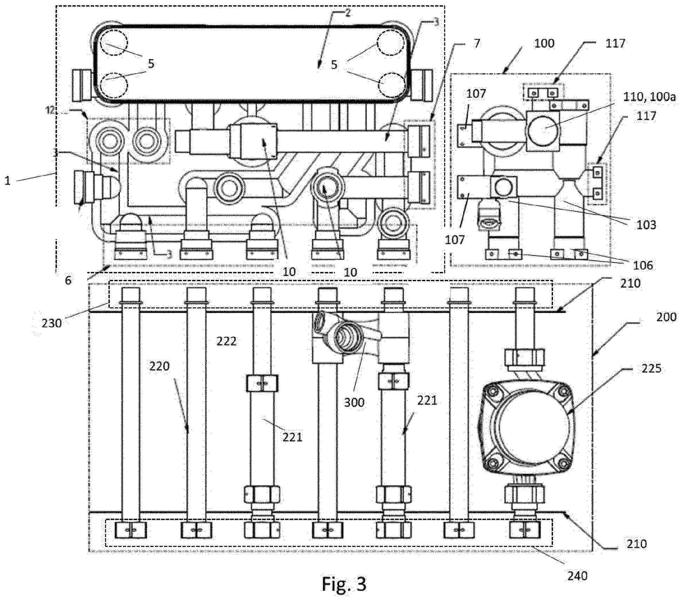

The set of second coupling ports (6) is adapted for connecting the main part (1) to an additional module (100), as is illustrated in fig. 3. The additional module (100) could include any of the features as the main part (1) and could in one embodiment be essentially a main part (1) construction itself.

The additional module (100) as a minimum includes at least one module flow path (103) to be connected the at least one flow path (3) of the main part (1) via second module coupling ports (107). The second module coupling ports (107) are adapted to be coupled to the set of third coupling ports (7) of the main part (1).

The set of third coupling ports (7) of the main part (1) in the illustrated embodiment, is shown to connect to a flow path (3) adapted to connect to the heat exchanger (2). The heat exchanger (2) then could be position such that the additional module (100) forms part of the network of heated domestic fluid, enabling it e.g. to be connected to floor heating installations etc. The main part (1) then could provide the coupling ports (6) for a radiator installation circuit and the additional module (100) provides a set of first module coupling ports (106) to provide connection to additional installations - like floor heating.

Module flow paths (103) formed in the additional module (100) connects the set of first module coupling ports (106) to the set of second module coupling ports (107), and optionally to a set of third module coupling ports (117) adapted to connect to a further additional module (100).

The set of first module coupling ports (106) comprise a port to connect to a supply line of the consumer network connected e.g. a floor heating installation, and port a to connect to the return line. Each of the ports in the set of first module coupling ports (106) is connected to a port in the second set module coupling ports by a module flow paths (103).

The module flow paths (103) could comprise any of the receiving spaces (10, 10a, 10b, 10c, 110, 110a) etc like the main part (1), where some (110a) could be for diversion valves to allow some of the flow to pass through a further additional module (100) connected by the set of third module coupling ports (117).

The additional module (100) in an embodiment itself may be monolithic formed of a single body in the same manner as the main part.

The main part (1) could include a set of fourth coupling ports (8) allowing it to be coupled to a second additional module (100). They could be connected to different flow paths (3) relative to the set of third coupling ports (7). In one embodiment the third coupling ports (7) is adapted to circuit a heated domestic fluid (in a connected heat exchanger (2)), whereas the fourth coupling ports (8) are adapted to circuit the fresh domestic fluid, such as cold water, not circuited in the heat exchanger (2).

The set of second coupling ports (6) may include a port be adapted to connect to a supply network supply line of heating fluid, and a corresponding port to connect to a return line. A port may be adapted to connect to a supply network supply line of domestic fluid (e.g. cold water), and a corresponding port to connect to the consuming network to feed heated domestic fluid after it has passed the heat exchanger (2). A domestic bypass flow path (3a) may connect the port to be connected to a supply line of domestic fluid, and a port to return domestic fluid before it has passed the heat exchanger (2). This is to allow the supply of e.g. cold water to shower and water taps, where it possible could be mixed with the heated domestic fluid.

An appropriate number of receiving spaces (10a) adapted for a diversion valve may be positioned to ensure right proportions of flow to respective the first (5), third (7) and fourth (8) coupling ports.

Any of the first (5), third (7) and fourth (8) coupling ports could be adapted to be closed by a plug (not shown) if not to be used.

Fig. 3 shows a heat exchanger (2) being coupled to the main part (1) and the set of first coupling ports (5) are shown by dashed lines to illustrate they are positioned underneath the heat exchanger (2) and thus are being seen through this.

As indicated the set of second coupling ports (6),and set of first module coupling ports (106), are adapted to connect the supply and consuming networks. However, such installations usually are installed with a traditional coupling formed of sets of windings. When the heating station including the main part (1) and possible additional modules (100) are formed of other materials, such as composites or plastics, it may not be sustainable using such winded connections.

The heating station therefore is adapted to include an interconnection device (200). The set of second coupling ports (6) thus may be adapted to connect to interconnection device (200), which then is to be positioned between the heating station and supply and consuming networks.

The interconnection device (200) is formed of holding means (210) fixing a set of interconnecting conduits (220). The interconnecting conduits (220) at one end are formed with a set of first interconnection couplings (230) adapted to be coupled to the set of second coupling ports (6) and optionally the set of first module coupling ports (106). At the other end the interconnection conduits (220) are formed with a set of second interconnection couplings (240) adapted to be coupled to the supply and consuming networks, such as to their pipes.

The interconnecting conduits (220) are adapted for flow devices (225), such as valves, flow sensors and pumps, to be positioned between the heating station and the supply and consuming networks.

There may be at least two holding means (210) that may be formed as rails interconnecting a plural of pipes (220) being the interconnecting conduits (220). The plural of pipes (220) then could be connected to the rail at two positions to fixate them.

At least some of the interconnecting conduits (220) may be formed as pipe sections (221, 222) whereto the flow devices (225) can be attached. The pipe sections (221, 222) then is adapted such that an installer can replace a section (221, 222) with a flow device (225).

This offers an additional advantage. Where the heating station formed of a main part (1) and possible additional modules (100) is adapted for specialized flow devices (25), that is specially adapted for e.g. insertion into receiving spaces (10, 10a, 10b, 10c, 110, 110a), the installer may wish to use other products, e.g. reuse old ones, use their own products etc. The interconnecting device (200) then offers the possibility to install these rather that installing specialized flow devices (25) in the heating station, or in addition to these.

The interconnecting conduits (220) may be formed with a different kind of set of first interconnecting coupling ports (230) compared to the set of second interconnecting coupling ports (240). The coupling of the set of first interconnecting coupling ports (230) would be adapted to couple to the set of second coupling ports (6) and set of first module coupling ports (106). The set of second interconnecting coupling ports (240) would be adapted to be coupled to the supply and consuming networks and could e.g. be provided with traditional threaded connection to connect to the supply and consuming network pipes.

The interconnecting conduits (220) may be formed of more traditional metals for such heating pipe systems.

At least two of the interconnecting conduits (220) may intersect each other, allowing to adapt to different local relative positioning of the pipes in the supply and consuming networks relative to the position in the heating station.

During e.g. summer, when it is warm and the heating installations like radiators and floor heating systems are closed, no, or little, heated domestic fluid and heating fluid are flowing in the supply and consuming networks. This gives standing fluids that would cool over time, this increasing the required time to obtain a requested temperature, ones opened again. Further, it increases the risk of e.g. legionella.

For this purpose, a by-pass (300) is positioned connecting the heating supply and heating return conduit of the supply network, and where the by-pass (300) is adapted to be opened and closed. In one embodiment the by-pass (300) is opened at regular intervals, e.g. during summer, and in another embodiment is opened for a small fluid to flow continuously.

Such by-passes (300) are known in general, but in the present invention it is installed at the interconnection device (200), and thus between heating station and possible additional module (100) set of second coupling ports (6) and set of first coupling ports (106), and the couplings of the supply and consumer networks.

Any of the openings, such as the first, second, third, fourth and set of fifth coupling ports (5, 6, 7, 8, 9) or the receiving spaces (10, 10a, 10b, 10c, 110, 110a), are adapted to be closed if not in use. In one embodiment, rather than connecting them to a flow pipe or a device like a specialized flow device (25) or heat exchanger (2), they are adapted to be closed by insertion of a plug (not illustrated). The plug may be inserted such that e.g. the inner openings (4a, 4b) in the inner wall of the receiving spaces (10) are not closed, only the opening towards the externals.

In an embodiment a plug is formed such that it only closes one of the inner openings (4a, 4b) but not the other, leaving this opening free to be coupled to a further device. In this embodiment the plug then may be adapted as a coupling to the device.

### References:

- 1 -: Monolithic main part
- 2 -: Heat exchanger
- 3 -: First flow conduits
- 3a -: Domestic bypass flow path
- 4a, 4b -: Openings
- 5 -: First coupling ports
- 6 -: Second coupling ports
- 7 -: Third coupling ports
- 8 -: Set of fourth coupling ports
- 10 -: Receiving spaces
- 10a -: Receiving space
- 10b -: Receiving space
- 10c -: Pressure section
- 11 -: Edge within an inner receiving space
- 12 -: Access opening
- 18 -: Pressure conduit
- 20 -: Access opening
- 25 -: Specialized flow devices
- 100 -: Additional module
- 103 -: Module flow paths
- 110 -: Receiving spaces
- 106 -: First module coupling ports
- 107 -: Second module coupling ports
- 117: -Third module coupling ports
- 200 -: Interconnection device
- 210 -: Holding means
- 220 -: Interconnecting conduits
- 221 -: Pipe section
- 222 -: Pipe sections
- 225 -: Flow devices, such as valves, flow sensors and pumps
- 230 -: First interconnection couplings
- 240 -: Second interconnection couplings
- 300 -: Bypass

## Claims

1. A heating station (500) formed of a monolithic main part (1) in that it is formed of a single body and adapted for a heat exchanger (2) to be connected to a set of first flow conduits (3) formed within said heating station (500) by a set of first coupling ports (5), wherein the heating station (500) is formed with receiving spaces (10, 10a, 10b) in fluid connection to the first flow conduits (3) adapted for specialized flow devices (25) to be inserted into said receiving spaces (10, 10a, 10b), e.g. valve assemblies, flow sensors or pumps, and wherein a set of second coupling ports (6) are adapted to connect the first flow conduits (3) to heating circuit pipes of a supply network and a consuming network, and where a set of third coupling ports are adapted for connecting the main part (1) to an additional module (100).

2. Heating station (500) according to claim 1, wherein a receiving space (10, 10a, 10b) forms part of a first flow conduit (3) and defines two openings (4a, 4b) in the inner receiving space wall, wherein the receiving space (10, 10a, 10b) is adapted for a valve (25) to regulate the fluid flow between said two openings (4a, 4b).

3. Heating station (500) according to claim 2, wherein an edge (11) within in the inner receiving space (10, 10a, 10b) wall between said two openings (4a, 4b) is adapted to operate as a valve seat.

4. Heating station (500) according to claim 1, wherein at least two different first flow conduits (3) are connected to a receiving space (10, 10a) allowing for a diversion valve (25) to be inserted.

5. Heating station (500) according to claim 1, wherein at least one receiving space (10, 10b) is formed with a pressure section (10c) adapted for a pressure actuator and which forms a fluid connection via a pressure conduit (18) to a position of a first flow path (3).

6. Heating station (500) according to any of the preceding claims, wherein a first flow path (3) forms two sections not connected to each other, and each section has an access opening (12) adapted for a connection device to connect them, where said connection device could be selected among a flow regulation valve, a pressure control valve, a flow sensor or a tube section.

7. Heating station (500) according to claim 6, wherein the main part (1) is provided with means for the connection device to be fixed to the heating station (500).

8. Heating station (500) according to claim 1, wherein the additional station module itself comprises access ports allowing it to be connected to a further additional module (100).

9. Heating station (500) according to any of the preceding claims, wherein the first flow conduits (3) include a supply heating fluid conduit and a return heating fluid conduit connecting adapted for a heating fluid to be circulated to a first flow path of a heat exchanger, and where flow conduits incudes a supply domestic fluid conduit and a return domestic fluid conduit connecting adapted for water to be circulated to a second path of a heat exchanger, the first flow conduits (3) further includes a flow path connected to said supply domestic fluid circuit for returning un-heated water, and where the supply heating fluid conduit and return heating fluid conduits only is connected to the set of third coupling ports (7) to be connected to the additional module (100).

10. Heating station (100) according to any of the preceding claims, wherein a receiving space (10, 10a, 10b, 10c) is provided on each first flow path (3) allowing the selection to insert a flow device or a sealing plug to close flow in said first flow path (3).

11. Heating station (500) according to any of the preceding claims, wherein the set of second coupling ports (6) are adapted to connect to an interconnection device (200) adapted to be positioned between the heating station (500) and heating flow circuit pipes of the supply network and consuming network, wherein the interconnection device (200) is formed of holding means (210) fixing a set of interconnecting conduits (220) adapted to be to couple to the first flow conduits (3) within the heating station (500) to the heating flow circuit pipes, and where the interconnecting conduits are adapted for flow devices (225), such as valves, flow sensors and pumps, to be positioned between the heating station (500) and the supply and consuming network.
